## Europäisches Patentamt
## European Patent Office
## Office européen des brevets

(19)

(11) Numéro de publication: **0 398 786**

**A1**

(12) # DEMANDE DE BREVET EUROPEEN

(21) Numéro de dépôt: **90401229.1**

(51) Int. Cl.5: **A23L 1/308, A23L 1/214**

(22) Date de dépôt: **09.05.90**

| | |
|---|---|
| La demande, qui etait incomplète au moment du dêpot, est publiée telle quelle (article 93 (2) CBE). Le passage de la description qui comporte manifestement une omission est présenté comme tel. | (71) Demandeur: **Socété Anonyme dite: AGRO INDUSTRIE RECHERCHES ET DEVELOPPEMENTS**<br>**27-29 rue Chateaubriand**<br>**F-75383 Paris(FR)** |
| (30) Priorité: **16.05.89 FR 8906351** | (72) Inventeur: **Naudin, Olivier**<br>**3, rue des Remparts, Bétheniville**<br>**F-51110 Bazancourt(FR)**<br>Inventeur: **Villemont, Pascal**<br>**96 Avenue Claude Debussy**<br>**F-03100 Montlucon(FR)**<br>Inventeur: **De Baynast, Régis**<br>**35, rue de L'Hermitage**<br>**F-78000 Versailles(FR)**<br>Inventeur: **Regnault, Alain**<br>**17 Avenue de Viarmes**<br>**F-60260 Le Lys La Morlaye(FR)** |
| (43) Date de publication de la demande:<br>**22.11.90 Bulletin 90/47** | |
| (84) Etats contractants désignés:<br>**AT BE CH DE DK ES FR GB GR IT LI LU NL SE** | |
| | (74) Mandataire: **Bourgognon, Jean-Marie et al**<br>**Cabinet Flechner 22, Avenue de Friedland**<br>**F-75008 Paris(FR)** |

(54) **Procédé de préparation de fibres alimentaires à partir de bettraves et fibres obtenues par ce procédé.**

(57) On déchiquète des betteraves en présence de sulfite, on les soumet à des opérations de pressage et de repulpage (5,8,11,14,17), puis à un traitement de désaromatisation (20) par de l'eau et de la vapeur, et à un séchage (28). Industrie alimentaire.

EP 0 398 786 A1

La présente invention a trait aux procédés de préparation de fibres alimentaires à partir de betteraves et aux fibres alimentaires obtenues par ces procédes.

La fraction polysaccharidique insoluble de la betterave est une matière première de choix pour la fabrication de fibres alimentaires, en raison de sa teneur élevée en pectines et en hémicelluloses.

Plusieurs procédés de préparation ont déjà été proposés et utilisent comme matière première les pulpes fraîches de betterave sucrière issues de diffusion. Les fibres ainsi produites, outre leur teneur élevée en minéraux (silice) et en sucres et leur couleur grisâtre, ont un goût amer et dégagent une odeur caractéristique de betterave lors de leur réhydratation dans l'eau chaude.

Divers traitements ont été proposés pour pallier ces inconvénients : ces traitements mettent en oeuvre, soit des solvants comme l'éthanol (Grünenthal, EP-A-0035643 ; SRD, FR-A-85.16748) ou l'alcool isopropylique (Robert J. Beale, et col. US-A-4.451.489) ou des agents chimiques de blanchiment (J.B. Thompson US-A-4.307.121) ou encore un chauffage à la vapeur surchauffée pour atténuer, dans ce dernier cas, l'amertume de la pulpe. Cependant, aucun de ces traitements ne permet d'obtenir une fibre de betterave qui soit agréable sur le plan des propriétés organoleptiques et qui soit satisfaisante sur le plan des propriétés fonctionnelles (pouvoir de rétention d'eau).

Au brevet français n° 2 374 855, on traite des cossettes en les désucrant. Après cette opération de désucrage, et séchage des cossettes désucrées, on les broie en un produit alimentaire. Contrairement aux affirmations de ce brevet, il est impossible par diffusion de désucrer des cossettes à une teneur pondérale en sucre inférieure à 7 % sur la matière sèche. Le produit alimentaire obtenu contient donc nécessairement trop de sucre.

Au brevet des E.U.A. n° 4 795 653, on prépare des fibres dites diététiques à partir de fines cossettes. La Demanderesse a repris le procédé décrit dans ce brevet et a constaté que les fibres obtenues, outre qu'elles sont de couleur rosâtre, ont une teneur pondérale en sucre de 44 % et en fibres AOAC de seulement 46 %. On ne peut les considérer comme des fibres diététiques en raison de la teneur en sucre.

L'invention vise un procédé de préparation de fibres alimentaires à teneur pondérale en sucre inférieure à 5 %, de couleur blanche, inodores, sans arrière-goût de betterave, et à haut pouvoir de rétention d'eau, n'impliquant que des traitements à l'eau et à l'excusion de tout traitement au moyen de solvants ou d'agents chimiques de blanchiment.

L'invention a pour objet un procédé de préparation de fibres alimentaires à partir de betteraves, caractérisé en ce qu'il consiste successivement

a) à déchiqueter des betteraves en particules de dimensions comprises entre 0,2 et 2 mm,

b) à soumettre les particules de betteraves à une opération de pressage, suivie d'au moins deux opérations chacune de remise en suspension dans de l'eau ou dans un jus épuisé et de pressage, le dernier pressage pouvant être omis, l'ensemble de ces opérations durant moins de trente minutes et étant effectué à une température inférieure à 35°C, jusqu'à obtention, outre d'un jus sucré, d'un marc de fibres désucré ayant, calculée sur la matière sèche, une teneur pondérale en succharose inférieure à 20 %,

c) à faire subir au marc de fibres désucré ou à la suspension de marc de fibres désucré un traitement d'entraînement à la vapeur d'eau, jusqu'à perception d'une odeur vanillée, pour obtenir un marc de fibres exempt d'arôme de la betterave, puis

d) à presser le marc de fibres exempt d'arôme et à le sécher.

Le traitement, non de cossettes de diffusion, mais de broyats très fins de betterave entière, permet d'obtenir une grande surface d'échange et, surtout, un taux élevé de cellules éclatées ou coupées par rapport aux cossettes, de sorte que le désucrage ne s'effectue plus, d'une manière nécessairement limitée à basse temperature, par osmose à travers les membranes cellulaires, mais par une lixiviation bien plus efficace même à la température ambiante. On peut alors désucrer efficacement à basse température et rapidement, notamment en moins de 30 minutes et à 25°C, sans donner aux réactions parasites conduisant à la formation de produits amers ou aromatiques le temps de se développer. Les quelques produits de ce type, qui se sont formés, ne sont pas adsorbés fortement sur les fibres, en sorte qu'ils peuvent être ensuite entrainées facilement à la vapeur d'eau.

Le premier stade du procédé consiste à déchiqueter des betteraves. Ce déchiquetage, qui peut s'effectuer par broyage, fait éclater les parois des cellules et permet ainsi d'extraire ensuite, par simple pressage, aussi bien le saccharose que les autres substances solubles. Ces dernières contribuent de façon significative au développement de pigments et de goûts indésirables. Le premier stade du procédé peut être effectué au moyen d'une râpe rotative type râpe à fruit, d'un broyeur à couronne ou de tout autre équipement ou association d'équipements capables de produire des particules aux caractéristiques sus-mentionnées.

Si la taille des particules est sensiblement inférieure à 0,2 mm, le broyat passe par fluage à travers les fentes du tamis des presses à vis hélicoïdales et, si elle est supérieure à 2 mm, le désucrage à froid est imparfait car il n'y a pas assez de cellules éclatées.

Au cours du broyage, ou aussitôt après, par exemple moins de 30 minutes et, mieux, moins de 0.5 minute ou 30 secondes après, on procède à l'addition d'un agent inhibiteur des systèmes enzymatiques (polyphénoloxydase, tyrosinase,) responsable du brunissement de la majeure partie des fruits et des légumes fraîchement coupés.

L'agent inhibiteur préféré est le dioxyde de soufre ou le bisulfite de sodium ajouté à raison de 0,125 à 0,250 kg de $SO_2$ par tonne de betterave.

Il peut être aussi remplacé par du sulfite, du métabisulfite, aux mêmes doses ou par un acide de qualité alimentaire (citrique, malique, ascorbique, phosphorique) permettant de ramener le pH en-dessous de 3,0, ou par un agent chélatant du cuivre, ou encore par un borate.

Si l'on dépasse sensiblement les doses recommandées de $SO_2$ (par exemple supérieures à 0,5 kg $SO_2$/tonne de betteraves), les traitements ultérieurs ne sont pas suffisants pour éliminer le $SO_2$ et la fibre possède un goût et une odeur désagréables.

Si l'on ajoute une dose de $SO_2$ nettement inférieure (par exemple moins de 0,1 kg $SO_2$ de betteraves), compte tenu que celle-ci est éliminée au cours des épuisements progressifs des marcs par lavage à eau, la concentration en $SO_2$ devient trop faible pour continuer à inhiber les phénoloxydases, avant leur dénaturation à la chaleur dans le traitement final et on assiste à un jaunissement irréversible des fibres.

Le deuxième stade du procédé, suivant l'invention, consiste à soumettre les betteraves déchiquetées à des opérations de pressage et de remise en suspension dans de l'eau, jusqu'à obtention d'un marc de fibres ayant une teneur pondérale en saccharose inférieure à 20 % et, de préférence, inférieure à 5 %, puis à sécher le marc de fibres.

Il est recommandé de travailler à une température inférieure à 25°C lors des trois premières étapes de pressage et de remise en suspension, lesquelles permettent d'éliminer la majeure partie (90 %) du sucre et des autres matières solubles et, dans le minimum de temps, en 20 à 30 minutes par exemple.

Si la température est significativement supérieure à 35°C et si le marc encore imparfaitement désucré réside pendant de longues périodes de temps, il se développe des couleurs, des goûts et des arômes indésirables dus au "réveil" de certains systèmes enzymatiques oxydatifs imparfaitement inhibés par le $SO_2$ ajouté. De surcroît, à température supérieure à la température ambiante, le $SO_2$ s'évapore.

Si les conditions de traitement sont respectées, les fibres ainsi produites ont des propriétés organoleptiques bien supérieures à celles préparées à partir de pulpes de betteraves issues d'un procédé de diffusion de cossettes, opération qui dure environ 2 heures et est réalisée à des températures comprises entre 70 et 75°C.

La technique préconisée de broyage, de pressage et de repulpage successif (4 étapes) permet d'abaisser la teneur en saccharose des fibres à 3-5 % en poids, alors que celle des pulpes de betteraves issues de sucrerie est généralement comprise entre 7 et 12 % par rapport à la matière sèche insoluble.

Le pressage peut s'effectuer soit avec des presses à vis, des fitres presses ou tout autre équipement permettant d'exprimer un jus à partir d'un marc.

On a préféré, pour obtenir un traitement rapide et continu, adopter des presses à vis hélicoïdales à section libre décroissante (de l'entrée à la sortie) dotées de tamis à fentes transversales, perpendiculaires à l'axe de la presse ; la largeur des fentes (0,160 à 0,180 mm) étant inférieure à la taille des plus petites particules du broyat (0,200 mm)

La pression de gavage des presses est de $+0,2.10^5$ à $+0,5.10^5$ Pascal et la pression maximale à laquelle est soumis le marc dans la partie la plus étroite de la veine est de $4.10^5$ à $6.10^5$ Pascal. Si cette pression est significativement supérieure à $6.10^5$ Pascal, le fluage du marc à travers les fentes devient trop important (supérieur à 5 %) ; si cette pression est bien inférieure à $4.10^5$ Pascal, le pressage devient inefficace et le marc contient trop de sucre.

Après l'extraction du saccharose, comme décrit ci-dessus, on effectue pour obtenir un produit blanc, sans amertume ni odeur, un traitement à l'eau chaude et à la vapeur vive réalisé dans les conditions suivantes :

- rapport matière sèche du marc/eau compris entre 1/7 et 1/30, de préférence entre 1/10 et 1/5 ; en-dessous de 1/7, le mélange est difficilement agitable et la vapeur diffuse selon les chemins préférentiels, de plus la désamérisation du marc est imparfaite. En-dessous de 1/30, le mélange est trop fluide pour alimenter une presse à vis ;

- température comprise entre 70 et 100°C, de préférence entre 70 et 75°C. En-dessous de 70°C, le marc est mal désamérisé et désodorisé et les enzymes ne sont pas dénaturées, conduisant alors à une recoloration des fibres lors du séchage. Au-dessus de 75°C, on "cuit" la fibre, ce qui induit une modification des comportements rhéologiques des pectines qui deviennent alors très plastiques et cette fibre ne peut plus être correctement pressée dans une presse à vis ou un filtre-presse et le taux de matière

3

sèche de la fibre est inférieur à 15 % ;

- débit de vapeur traversant compris entre 0,5 et 2,5 kg/kg de matière sèche ; on préfère travailler avec des débits de vapeur compris entre 1,0 et 1,5 kg/kg à une pression inférieure à la pression atmosphérique. Un débit inférieur de vapeur ne conduit pas à une désaromatisation suffisante de la fibre. Un débit notablement supérieur conduit à une fibre trop cuite et difficilement pressable ;

- durée de traitement comprise entre 5 et 30 minutes et préférablement entre 10 et 15 minutes. Des durées de traitement inférieures ne permettent pas une dénaturation des enzymes et une désaromatisation suffisante. Des durées supérieures n'ont pas d'utilité ou sont préjudiciables à la qualité de la fibre.

Lorsqu'on pratique ce traitement par lot, l'injection de vapeur et poursuivie jusqu'à ce que l'odeur caractéristique de la betterave soit remplacée par une odeur vanillée.

Ce traitement à l'eau chaude et à la vapeur dénature les systèmes enzymatiques responsables du brunissement, qui ont été inhibés au préalable par addition d'un sulfite, dénature les substances solubles responsables de l'amertume de la pulpe de betterave et élimine par entraînement les substances volatiles de l'arôme de la betterave.

Le dernier stade du procédé consiste à sécher le marc de fibres.

Pour conserver à la fibre sèche toutes ses propriétés fonctionnelles et organoleptiques, l'humidité du marc de fibres séchées ne doit jamais être inférieure à 10 % en poids, sinon le pouvoir de rétention des fibres diminue de façon significative : de 20 à 25 g/g pour une fibre à 10 à 12 % d'humidité, ce pouvoir s'abaisse à 5 à 10 g/g pour des fibres à 5 % d'humidité résiduelle.

La température des fibres ne doit pas dépasser 85°C pour éviter le racornissement qui a un effet néfaste sur la capacité de réhydratation.

En pratique, on utilise un sécheur à air chaud co-courant à lit fluidisé par brassage interne mécanique. La température du marc à l'entrée du sécheur est de 50 à 60°C, la température de l'air de sécharge est comprise entre 110 et 160°C et en réglant le débit d'air, on contrôle la température maximale atteinte par la fibre.

La séparation des buées et de la fibre sèche se fait par cyclonnage à une température supérieure à la température de rosée. La température de résidence d'une particule de fibre dans le sécheur et le cyclone est de l'ordre de 20 à 30 secondes.

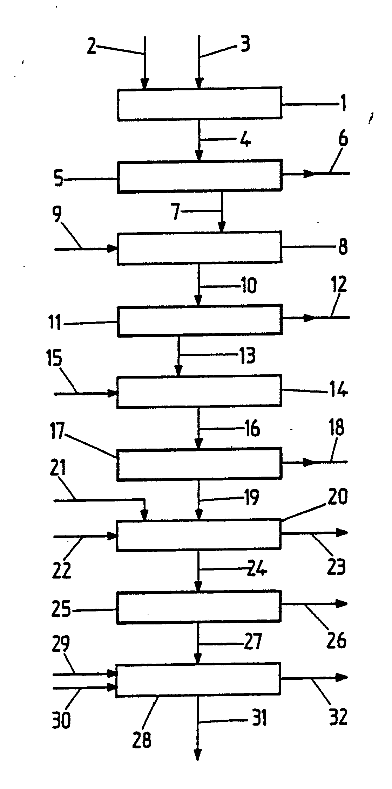

Le dessin annexé est un schéma illustrant le procédé suivant l'invention.

Le procédé comprend une opération de déchiquetage 1 de betteraves amenées par un conduit 2, en présence de NaHSO$_3$ amené par un conduit 3. Les betteraves déchiquetées vont comme schématisé par une ligne 4 à une première opération de pressage 5 permettant de séparer un jus sucré, que l'on rejette par un conduit 6, et un premier marc que l'on envoie, par une ligne 7, à un mélangeur 8 dans lequel on ajoute de l'eau par un conduit 9. Du mélangeur 8, la pulpe obtenue va, par une ligne 10, à un deuxième pressage 11 où l'on sépare la pulpe en un jus sucré que l'on évacue par un conduit 12 et en un marc que l'on envoie, par une ligne 13, à un mélangeur 14 recevant, par un conduit 15, de l'eau. Du mélangeur 14, la pulpe obtenue va, par une ligne 16, à une troisième opération de pressage 17 donnant un jus sucré que l'on rejette par un conduit 18 et un marc que l'on envoie, par une ligne 19, à une opération de désaromatisation 20 à laquelle on envoie de l'eau par un conduit 21 et de la vapeur par un conduit 22. Les buées sont rejetées par un conduit 23 et la pulpe, issue de l'opération de désaromatisation 20, est envoyée, par une ligne 24, à une quatrième opération de pressage 25 où elle est séparée en un jus que l'on rejette par un conduit 26 et en un marc que l'on envoie, par une ligne 27, à un séchage 28 recevant, par un conduit 29, de la vapeur et, par un conduit 30, de l'air chaud et rejetant des buées par un conduit 32 et des fibres alimentaires par une ligne 31.

Les exemples suivants illustrent l'invention.


### EXEMPLE 1


1000 kg de betteraves sont soigneusement lavées et épierrées, puis elles sont broyées sans addition d'eau dans une râpe rotative et ensuite dans un broyeur à couronnes réglées de façon à fournir un broyat constitué de particules de taille comprise entre 0,2 et 2 mm. Afin d'éviter le brunissement enzymatique, on inhibe la polyphénoloxydase en ajoutant au cours du râpage 1,0 litre de solution à 30 % de bisulfite de sodium (soit environ l'équivalent de 0,25 kg de SO$_2$).

TABLEAU I

| Poids et composition des marcs de pressage | | | | | |
|---|---|---|---|---|---|
| Poids de broyat ou de marc | | Saccharose (% ms) | Autres matières solubles (% ms) | Matières insolubles (dont fibres) (% ms) | Fibres (AOAC) (% ms) |
| Broyat de betterave | 1000 kg | 71,1 | 8,9 | 20 | 17 |
| Marc humide (1er étage) | 285 kg | 37,5 | 4,7 | 57,8 | 48 |
| Marc humide (2ème étage) | 251 kg | 20,8 | 2,6 | 76,6 | 64 |
| Marc humide (3ème étage) | 237 kg | 10 | 1,2 | 88,8 | 74 |
| Fibres humides (4ème étage) | 197 kg | 2,4 | 0,3 | 97,3 | 81 |

Ce broyat, dont la composition est donnée au tableau 1, est pressé une première fois (1er étage), le marc est réimbibé avec 624 litres d'eau, pressé une seconde fois (2ème étage), le marc résultant réimbibé avec 611 litres d'eau, puis pressé une troisième fois (3ème étage). Le pressage est réalisé dans trois presses à vis hélicoïdales et la réimbibation est effectuée "en continu" dans des mélangeurs centrifuges. Ce traitement prend 20 minutes et est réalisé à une température comprise entre 15 et 20° C.

Le marc issu du troisième étage de pressage (237 kg dont 45 kg de matière sèche) est mélangé à 450 litres d'eau à 75° C dans un pulpeur de 800 litres muni d'un agitateur efficace (30 tr/mn) permettant d'assurer la mise en suspension de la fibre contenue dans le marc. De la vapeur détendue à $1,5.10^5$ Pascal est injectée par le fond du pulpeur de façon séquentielle pour maintenir la temperature à 75 ± 3° C et assurer un dégagement des arômes de la betterave. Après 15 minutes, on perçoit une odeur légèrement vanillée indiquant la fin de l'opération.

La quantité totale de vapeur injectée pour maintenir la température de 75 ± 3° C et assurer le dégagement des arômes indésirables est de 65 kg.

Le contenu du pulpeur sert à alimenter une quatrième presse à vis hélicoïdales qui fournit un marc (197 kg à environ 20 % de matière sèche totale).

Le marc chaud (40-50° C) est ensuite progressivement introduit en 50 minutes dans un sécheur à air chaud co-courant à lit fluidisé. L'énergie nécessaire au séchage est apportée par un chauffage extérieur de la chambre du sécheur par de la vapeur à $12.10^5$ Pascal (160° C) et par de l'air chaud à 165° C. On recueille par cyclonage à 80° C une fibre de betterave possédant les caractéristiques suivantes (voir tableau 2).

La teneur en fibres diététiques a été mesurée selon la méthode officielle AOAC (Association of Official Analytic Chemists, publiée par PROSKY. L et al., J. Assoc. off. Anal. Chem. (1984), 67, 1044-1052.

TABLEAU 2

| Compositions et caractéristiques de la fibre de betterave | |
|---|---|
| Humidité | 11 % |
| Composition (en % sur sec) | |
| Fibres alimentaires (méthode de AOAC) | 87 % |
| Protéines (N x 6,25) | 7 % |
| Sucres totaux | 3 % |
| Cendres | 3 % |
| Composition de la fraction fibre (en %) | |
| Cellulose | 26 % |
| Hémicellulose | 38 % |
| Pectine | 22 % |
| Lignine | 1 % |
| Capacité de rétention d'eau | 20 g/g |
| Capacité d'échange d'ions | 0,4 meq/g |
| Granulométrie | 600 μm |
| Goût | Neutre (absence d'amertume) |
| Arôme | Neutre |
| Couleur | Blanc |

La capacité de rétention d'eau est déterminée selon le protocole suivant :
- Placer un tamis (maille de à 0,5 mm environ) dans un cristallisoir et remplir ce dernier avec de l'eau jusqu'à mi-hauteur du tamis.
- Egoutter le tamis pendant 5 minutes (PO).
- Remettre le tamis dans le cristallisoir.
- Ajouter 10 g de fibres (P).
- Laisser reposer 20 minutes.
- Egoutter le tamis pendant 5 minutes.
- Peser (P1).

La capacité de rétention d'eau (CRE) en g/g est égale à :
$$CRE (g/g) = ((P1 - PO) - P)/P$$

La capacité d'échange d'ions est déterminée selon le protocole suivant.

On disperse 2,500 g de fibres broyées sèches dans 250 ml d'acide chlorhydrique 0,1 M, on maintient sous agitation pendant 16 heures, puis on filtre, on rince avec 5 x 200 ml d'eau distillée, on sèche (100 $^\circ$ C pendant 12 heures). 1000 g de fibres mises sous forme acide sont dispersées dans 50 ml d'eau distillée, et le pH de la suspension est ramené à 7.0 par addition de KOH 0,1 N (volume V).

La capacité d'échange de cations (CEC) en milliéquivalent par gramme de fibres (meq/g) est :
$$CEC = V \times 0,1 \text{ meq/g}$$

La neutralité aromatique est appréciée de la manière suivante.

5 g de fibres sont placées dans un bécher de 150 ml, on verse alors 100 ml d'eau à 70 $^\circ$ C et on agite avec une spatule pour mettre les fibres en suspension.

Les fibres sont jugées aromatiquement neutres si l'on ne perçoit pas l'odeur caractéristique de la betterave cuite. Si l'expérimentateur n'est pas entraîné, en effectue un test test triangulaire avec un échantillon de fibre de betterave non traité à la vapeur et qui, mis en suspension dans l'eau chaude, dégage une odeur caractéristique de betterave.

La neutralité gustative (absence d'amertume) de la fibre de betterave est appréciée en goûtant les jus de macération de la fibre de betterave et en essayent de détecter une amertume. On utilise comme référence une solution de chlorhydrate de quinine à 3 mg/l, le dégustateur déterminant si la fibre n'est pas plus amère que la solution de quinine.

L'intensité de la couleur de la fibre a été mesurée sur un appareil d'analyse tridimensionelle de la couleur (Color Difference Meter, Modèle 220 P, Neotec C $^\circ$). On mesure les différences de couleurs ΔL (luminosité), Δa (rouge-vert) et Δb (jaune-bleu) : par étalonnage l'équipement fournit des valeurs absolues de L, de a et de b.

Les fibres de betteraves préparées par la technique sus-décrite (échantillons 1, 2, 3) sont significativement plus blanches (valeurs de L comprises entre 85 et 87 avec L = 100 pour le blanc et L = -100 pour le noir) que les échantillons 4 et 5 préparés à partir de pulpes de betteraves issues de diffusion.

TABLEAU 3

| Mesure de l'intensité de la couleur des fibres de betteraves obtenues selon différents traitements | | | | |
|---|---|---|---|---|
| Enchantillon No | L | a | b | Technique d'obtention de la fibre |
| 1 | 85,4 ± 0,3 | -0,4 + 0,15 | 9,8 + 0,1 | Exemple 1 |
| 2 | 87,0 ± 0,1 | -1,6 ± 0,1 | 9,2 ± 0,25 | Exemple 1 |
| 3 | 85,0 ± 0,2 | -1,1 | 9,0 ± 0,15 | Exemple 1 |
| 4 | 76,5 ± 0,3 | -0,2 ± 0,05 | 8,7 ± 0,15 | Pulpe de betterave |
| 5 | 71,5 ± 0,2 | -1,65 ± 0,1 | 15,3 ± 0,15 | Pulpe de betterave sèche à la vapeur surchauffée |

## EXEMPLE 2

Des betteraves sont traitées selon l'exemple 1 jusqu'au 3ème pressage, le marc issu de la 3ème presse est mélangé dans un pulpeur avec 15 fois son poids d'eau chaude à 75°C (calculé par rapport à la matière sèche) et agité pendant 15 minutes à 75°C sans injection de vapeur. Le contenu du pulpeur est ensuite essoré dans une presse continue et le marc résultant séché dans les mêmes conditions que celles décrites dans l'exemple 1.

Les fibres ainsi préparées sont en tout point semblables aux fibres obtenues à l'exemple 1, sauf qu'elles dégagent une odeur caractéristique de betterave cuite lorsqu'elles sont replongées dans l'eau chaude.

## EXEMPLE 3

Des betteraves sont traitées selon l'exemple 2, à la seule différence qu'elles sont repulpées après le 3ème pressage dans l'eau froide (20°C) sans injection de vapeur. Les fibres ainsi préparées sont en tout point semblables aux fibres obtenues à l'exemple 1 en ce qui concerne leur composition chimique, leur capacité de rétention d'eau et d'échange d'ions, sauf :
- qu'elles ont une couleur grisâtre avec une luminosité comprise entre 70 et 75 ;
- qu'elles ont une odeur caractéristique de betterave cuite lorsqu'elles sont plongées dans l'eau chaude;
- que le jus de macération de ces fibres est amer.

## EXEMPLE COMPARATIF

On reprend le procédé décrit au brevet du E.U.A. n° 4 795 653. On lave 1 betterave d'un 1kg. On la pèle. On la découpe en lanières d'une épaisseur comprise entre 0,5 et 1,5 mm, d'une longueur de 4 à 6 cm et d'une largeur de 3 à 5 mm. On recouvre ces lanières de 2 litres d'acide acétique à 2 % en poids en opérant à la température ambiante pendant 2 minutes. On égoutte dans un panier perforé. On recouvre les lanières de 2 litres d'une solution d'acide ascorbique à 5,5 g/l. (2,5g/lb) à 50°C pendant 5 minutes. On égoutte. On presse les lanières dans une presse verticale à piston, en augmentant progressivement la pression en 2 minutes jusqu'à 10 bar et on maintient cette pression de 10 bar jusqu'à la fin de l'égouttage. Le gâteau de pressage a une teneur pondérale en matière sèche de 32,5 %, 16 % de matières insolubles et 16,5 % de matières solubles dans l'eau (sucres, acides aminés). On disperse ce gâteau et on le sèche en étuve ventilée à 105° C pendant 2 heures jusqu'à une humidité résiduelle de 10 % en poids.

Les fibres obtenues se présentent sous forme de fines lanières racornies de couleur rosâtre, ayant une odeur acétique. Leur teneur pondérale en sucre est de 44 %, ce qui correspond à un taux d'extraction du sucre contenu dans la betterave de 80 % (à comparer à 99,6 % suivant l'invention ). La teneur pondérale en fibres suivant AOAC (American Official Analytical Chemist) est de 46 % (à comparer à 87 % suivant l'invention). Le coefficient de rétention d'eau n'est que de 6, il est de 20 suivant l'invention.

**Revendications**

1. Procédé de préparation de fibres alimentaires à partir de betteraves, caractérisé en ce qu'il consiste successivement

a) à déchiqueter des betteraves en particules de dimensions comprises entre 0,2 et 2 mm,

b) à soumettre les particules de betteraves à une opération de pressage, suivie d'au moins deux opérations chacune de remise en suspension dans de l'eau ou dans un jus épuisé et de pressage, le dernier pressage pouvant être omis, l'ensem-ble de ces opérations durant moins de trente minutes et étant effectué à une température inférieure à 35° C, jus-qu'à obtention, outre d'un jus sucré, d'un marc de fibres désucré ayant, calculée sur la matière sèche, une teneur pondérale en saccharose inférieure à 20 %,

c) à faire subir au marc de fibres ou à la suspension de marc de fibres un traitement d'entraînement à la vapeur d'eau, jusqu'à perception d'une odeur vanillée, pour obtenir un marc de fibres exempt d'arôme de la betterave, puis

d) à presser le marc de fibres exempt d'arôme et à le sécher.

2. Procédé suivant la revendication 1, caractérisé en ce qu'il consiste à soumettre les betteraves déchiquetées aux opérations répétées de pressage, de repulpage à l'eau et de repressage, jusqu'à obtention d'un marc de fibres ayant une teneur pondérale en saccharose inférieure à 5 %.

3. Procédé suivant la revendication 1 ou 2, caractérisé en ce qu'il consiste à mettre les betteraves, lors de leur déchiquetage ou aussitôt après, en présence d'un agent inhibiteur des systèmes enzymatiques provoquant le brunissement des betteraves.

4. Procédé suivant la revendication 3, caractérisé en ce que l'agent inhibiteur est du dioxyde de soufre, du bisulfite, un sulfite, un métabisulfite, un acide de qualité alimentaire, un agent chélatant le cuivre ou un borate.

5. Procédé suivant l'une des revendications précédentes, caractérisé en ce qu'il consiste à mettre le marc de fibres désucré en suspension dans de l'eau à une température de 70° C à 75° C pendant au moins cinq minutes avant d'effectuer l'opération d'entraînement à la vapeur d'eau.

6. Procédé suivant l'une des revendications précédentes, caractérisé en ce qu'il consiste à sécher le marc de fibres exempt d'arômes à une température inférieure à 85° C et sans que sa teneur pondérale en humidité devienne inférieure à 10 %.

7. Fibres alimentaires, neutres aromatiquement et gustativement, de couleur correspondant à une valeur de luminosité L supérieure ou égale à 85 dans l'appareil Color Difference Meter modèle 220P de la Société Neotec, ayant une capacité de rétention d'eau d'au moins 20 g/g et une capacité d'échange d'ions d'au moins 0,4 meq/g.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | FR-A-2 374 855 (BAYER)<br>* Revendication 6; page 1, ligne 36 - page 2, ligne 23; page 2, lignes 29-31 * | 1-4 | A 23 L   1/308<br>A 23 L   1/214 |
| A | JOURNAL OF THE SCIENCE OF FOOD & AGRICULTURE, vol. 42, 1988, pages 77-85, Society of Chemical Industry, GB; F. MICHEL et al.: "Preparation and characterisation of dietary fibre from sugar beet pulp"<br>* Résumé; pages 79,80, paragraphe 1 * | 1,7 | |
| D,A | US-A-4 451 489 (R. BEALE et al.)<br>* Revendications 1,2,9; exemple 1 * | 1-4,6 | |
| D,A | US-A-4 795 653 (A.A. BOMMARITO)<br>* Revendication 1; colonne 2, lignes 26-64 * | 1-6 | |
| A | GB-A- 147 713 (A. AUMAN)<br>* Page 1, lignes 25-69; revendication 1 * | 1,5,6 | DOMAINES TECHNIQUES RECHERCHES (Int. Cl.5)<br><br>A 23 L |
| A | WO-A-8 809 624 (AMERICAN CRYSTAL SUGAR)<br>* Revendication 1 * | 1 | |
| D,A | US-A-4 307 121 (J.B. THOMPSON)<br>* Fig.; exemple 7 * | 1-7 | |
| D,A | EP-A-0 223 703 (SUCRE RECHERCHES ET DEVELOPPEMENTS)<br>* Revendications 1,6,9,10,11 * | 1,7 | |

Le présent rapport a été établi pour toutes les revendications

| Lieu de la recherche | Date d'achèvement de la recherche | Examinateur |
|---|---|---|
| LA HAYE | 27-08-1990 | VAN MOER A.M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P0402)